Europäisches Patentamt

European Patent Office

Office européen des brevets

(19)

(11) Numéro de publication: **0 395 760**
**A1**

(12)

# DEMANDE DE BREVET EUROPEEN PUBLI E EN APPLICATION DE
## L'article 158, paragraphe 3 de la CBE

(21) Numéro de dépôt: 88908417.4

(22) Date de dépôt: 26.05.88

(86) Numéro de dépôt internationale :
PCT/SU88/00130

(87) Numéro de publication internationale :
WO 89/11661 (30.11.89 89/28)

(51) Int. Cl.5: **G01S 1/18**

(43) Date de publication de la demande:
**07.11.90 Bulletin 90/45**

(84) Etats contractants désignés:
**BE CH DE FR GB IT LI NL SE**

(71) Demandeur: **NAUCHNO-EXPERIMENTALNY TSENTR AVTOMATIZATSII UPRAVLENIA VOZDUSHNYM DVIZHENIEM**
**Volokolamskoe shosse 26**
**Moscow, 123182(SU)**

(72) Inventeur: **VAXENBURG, Samuil Isaakovich**
**ul. Stremyannaya, 12-23**
**Leningrad, 191025(SU)**
Inventeur: **KUZMIN, Oleg Anatolievich**
**ul. Dubki, 11-95**
**Moscow, 125422(SU)**
Inventeur: **SHOLUPOV, Evgeny Ivanovich**
**Srednegavansky pr., 1/3-29**
**Leningrad, 199106(SU)**

(74) Mandataire: **Durand, Yves Armand Louis et al**
**Cabinet Z. Weinstein 20, Avenue de**
**Friedland**
**F-75008 Paris(FR)**

(54) **SYSTEME DE RADIOBALISES INDEPENDANTES POUR GUIDAGE VERTICAL.**

(57) Système de radiobalises indépendantes de guidage en site du type comprenant, disposées d'un même côté de la piste de décollage et d'atterrissage (3), une radiobalise de descente (1) dotée d'une antenne (7) émettant dans la bande d'onde métriques, dont le support (12) est disposé sur la surface du sol à une distance ($L_1$) de l'axe (4) de la piste de décollage et d'atterrissage (3), et une radiobalise de site (2) dotée d'une antenne (8) émettant dans la bande de micro-ondes, dont le centre de phase (13) se trouve à une hauteur (h) au-dessus de la surface du sol, le support (14) de l'antenne (8) de la radiobalise de site (2) se trouvant à une distance ($L_2$) de l'axe (4) de la piste de décollage et d'atterrissage (3), sur une droite (15) passant par le support (12) et perpendiculaire à l'axe (4) de la piste de décollage et d'atterrissage, et l'axe longitudinal (21) de l'antenne (8) de la radiobalise de site (2) étant incliné par rapport à la verticale (Z) du côté de la piste de décollage et d'atterrissage (3) d'un angle

$$\alpha = \text{arctg } \frac{h}{L_2}$$

et $L_2 < L_1$.

1

"Système de radiobalises indépendantes de guidage en site".

## Domaine de l'invention

La présente invention concerne la radiotechnique et plus précisément les aides radioélectriques à la navigation et à l'atterrissage des avions et a notamment pour objet un système de radiobalises indépendantes de guidage en site.

## Etat de la technique

A l'heure actuelle on utilise des systèmes "ILS" pour l'atterrissage des avions dotés de moyens radio-électriques de bord fonctionnant dans la bande d'ondes métriques (ILS) dénomés avions du type ILS.

Ce système ILS comprend une radiobalise de site ("Radionavigation aérienne", aide-mémoire, A.A.Sosnovsky e.a., 1980, p.179) fonctionnant dans la bande d'ondes métriques et qui est essentiellement une radiobalise de descente destinée à déterminer une seule trajectoire de descente à suivre dans le plan vertical, dite trajectoire de descente. La radiobalise de descente est implantée sur l'aérodrome, à côté de la piste d'atterrissage.

Un tel système a toutefois pour inconvénient de limiter l'intensité du trafic aérien dans l'espace aérien de l'aérodrome, car il nécessite l'exécution d'une manoeuvre compliquée d'approche à l'atterrissage suivant une seule et unique trajectoire : celle de descente (glide path).

En outre, la position de la ligne de descente dépend des paramètres électriques de la surface de la terre qui varient avec les saisons de l'année et les conditions météorologiques, car les signaux de la radiobalise de descente sont émis par l'intermédiaire de la surface de terre, puisque son antenne fonctionne dans la bande d'ondes métriques. C'est pourquoi en URSS et à l'étranger, il a été élaboré et est en train d'être mis au point un système d'atterrissage fonctionnant dans la bande de micro-ondes (système MLS) ("Convention relative à l'Aviation civile internationale", 1985, OACI (Montréal). Annexe 10, volume 1, chapitre 3.11, p.93). Ce système MLS satisfait à la norme internationale de l'International Civil Aviation Organization (ICAO) et est destiné à l'atterrissage des avions équipés d'appareils radio-électriques fonctionnant dans la bande de micro-ondes, autrement dit des avions du type MLS. Ce système MLS comprend, lui aussi, une radiobalise de guidage en site. Mais il diffère du système ILS en ce qu'il utilise en tant que radiobalise de guidage en site une radiobalise de site fonctionnant dans la bande de micro-ondes et installée sur l'aérodrome latéralement par rapport à la piste d'atterrissage.

La radiobalise de site fait le codage de l'espace aérien dans la zone d'approche pour l'atterrissage, en élaborant les coordonnées de site, ce qui permet de suivre n'importe quelle trajectroire de descente, rectiligne aussi bien que curviligne. La décision concernant la création de ce système MLS a été prise par la 7-ème conférence sur la Navigation aérienne de l'OACI en 1972. Ce système MLS est destiné à remplacer le système d'atterrissage ILS puisque la balise de site du système MLS utilise une antenne fonctionnant dans la bande de micro-ondes, dont le centre de phase est au-dessus de la surface du sol, de sorte que les signaux sont formés sans interférence avec la surface du sol.

Le remplacement du système ILS par le système MLS nécessitera le rééquipement d'une grande flotte d'avions et d'un grand nombre d'aérodromes et prendra 15 à 20 ans (jusqu'à 2005). Pendant cette période de transition deux types d'avions seront en service : ILS et MLS. Il faudra donc équiper les aérodromes des deux systèmes d'atterrissage : ILS et MLS.

Les schémas d'approche à l'atterrissage (c'est-à-dire de la trajectoire de vol dans la zone des aérodromes) doivent alors être les mêmes pour les deux systèmes.

Pour obtenir les mêmes trajectoires d'approche à l'atterrissage (les mêmes trajectoires de descente) à l'aide des deux systèmes de radiobalises, il faut faire coïncider à 1 mètre (3 pieds) près en point de repère, les signaux de pente minimale de descente formés par la balise de site du système MLS et les signaux de guidage sur la trajectoire de descente formés par la radiobalise de descente du système ILS reçus par les avions ("Convention relative à l'Aviation civile internationale", 1985, OACI (Montréal). Annexe 10, volume 1, chapitre 3.11, p.93).

On entend par "pente minimale de descente" l'angle minimal de descente au 0° en azimut.

On entend par "point de repère" de l'approche à l'atterrissage un point situé à une certaine hauteur au-dessus de l'intersection de l'axe de la piste de décollage et d'atterrissage avec le seuil de la piste ("Convention relative à l'Aviation civile internationale", 1985, OACI (Montréal). Annexe 10, volume 1, chapitre 3.11, p.73).

Le système connu de radiobalises de guidage en site ("Convention relative à l'Aviation civile inter-

nationale", Annexe 10, vol.1, partie 1, chapitre 3.11, p.370) dans lequel les signaux des radiobalises coïncident en point de repère, comprend une radiobalise de descente fonctionnant dans la bande d'ondes métriques et installée latéralement par rapport à la piste. La radiobalise de descente comprend une antenne sous forme d'un treillis du type "M" dont le centre de phase est situé près de son support se trouvant à une distance $L_1$ de l'axe de la piste. Cette radiobalise de descente est précédée, suivant le sens de l'approche à l'atterrissage, d'une radiobalise de site implantée du même côté par rapport à la piste et dotée d'une antenne à micro-ondes. Celle-ci est réalisée sous forme d'un réseau d'antennes à éléments en phase dont le centre de phase se trouve à une hauteur h au-dessus de la surface du sol. Toutefois, une telle position relative de la radiobalise de descente et de la radiobalise de site provoque des courbures inadmissibles de la ligne de descente formée par la radiobalise de descente pour l'atterrissage des avions du type ILS. Cet inconvénient provient du fait que dans un système de guidage la radiobalise de site se trouve normalement dans la zone critique de la radiobalise de descente, soit dans la zone de Fresnel de l'antenne de la radiobalise de descente, et cela pour faire coïncider les points de repère formés par les signaux des antennes des radiobalises de descente et de site. Ainsi donc le fait de disposer la radiobalise de site dans la zone critique de la radiobalise de descente est à l'origine des effets d'ombre et de réflexion exercés par les structures de la radiobalise de site sur le champ de rayonnement de la radiobalise de descente et donc à l'origine de la courbure de la trajectoire de descente formée par la radiobalise de descente.

Cette courbure de la trajectoire de descente formée par la radiobalise de descente conduit à effectuer l'atterrissage des avions du type ILS au-dessous du minimum météorologique d'atterrissage attribué à l'aérodrome, c'est-à-dire à cesser l'atterrissage aux instruments, par mauvais temps et à passer au pilotage manuel, ce qui requiert une plus grande capacité de décision, soit en dessus du minimum d'atterrissage attribué à l'aérodrome.

Exposé de l'invention

On s'est donc proposé de créer un système de radiobalises indépendantes de guidage en site dont la position relative est telle qu'il est possible d'implanter la radiobalise de site en dehors de la zone critique de la radiobalise de descente et d'éviter par conséquent les effets d'ombre et de réflexion exercés par les structures de la radiobalise de site sur le champ de rayonnement de la radiobalise de descente, ce qui permettrait d'éviter la courbure de la trajectoire de descente formée par la radiobalise de descente.

L'idée de l'invention consiste en ce que dans un système de radiobalises indépendantes de guidage en site comprenant, disposées d'un même côté de la piste de décollage et d'atterrissage, une radiobalise de descente dotée d'une antenne émettant dans la bande d'ondes métriques dont le support se trouve à une distance $L_1$ de l'axe de la piste, et une radiobalise de site dotée d'une antenne émettant dans la bande de micro-ondes et dont le centre de phase se trouve à une hauteur h au-dessus du sol, selon l'invention, le support de l'antenne de la radiobalise de site se trouve à une distance $L_2$ de l'axe de la piste, sur la droite passant par le support de l'antenne de la radiobalise de descente et perpendiculaire à l'axe de la piste, et l'axe longitudinal de l'antenne de la radiobalise de site est incliné par rapport à la verticale, du côté de la piste, d'un angle égal à

$$\alpha = \text{arctg}\ \frac{h}{L_2}\ ,$$

Il est raisonnable que la valeur absolue de la différence des distances $L_1$ et $L_2$ entre l'axe de la piste et les supports des antennes des radiobalises de descente et de site soit choisie dans un intervalle compris entre 12 et 19 mètres.

Il est avantageux que, dans le système selon l'invention, la distance $L_2$ entre le support de l'antenne de la radiobalise de site et l'axe de la piste soit inférieure à la distance $L_1$ entre le support de l'antenne de la radiobalise de descente et l'axe de la piste d'atterrissage.

L'invention permet de créer un système de radiobalises indépendantes de guidage en site dans lequel il est en principe impossible que les structures de la radiobalise de site exercent une influence sur le champ de rayonnement de la radiobalise de descente, grâce au fait que la radiobalise de site est placée en dehors de la zone critique de la radiobalise de descente, mais, comme l'antenne de la radiobalise de site est inclinée par rapport à la verticale du côté de la piste d'un angle $\alpha$ tel que :

$$\alpha = \text{arctg}\ \frac{h}{L_2}\ ,$$

le système satisfait à l'exigence selon laquelle les points de repère formés par les radiobalises de site et de descente doivent coïncider.

Cela permet d'effectuer l'approche pour l'atterrissage par mauvais temps avec des avions dotés des équipements de bord du type ILS cu du type MLS. L'approche pour l'atterrissage se fait alors aux instruments jusqu'à la "hauteur de décision" fixée pour chaque aérodrome et ce n'est qu'après avoir atteint le minimum d'atterrissage prescrit pour l'aérodrome, qu'il faut passer en commande manuelle (au pilotage manuel).

Description sommaire des dessins

L'invention sera mieux comprise à la lecture de la description d'un exemple de réalisation qui va suivre et qui se réfère aux dessins annexés dans lesquels :

La figure 1 représente schématiquement un système de radiobalises indépendantes de guidage en site, selon l'invention.

La figure 2 représente le même système en vue de dessus.

La figure 3 est un schéma expliquant la position du point de repère de la trajectoire de descente à pente minimale formée par la radiobalise de site et de la trajectoire de descente formée par la radiobalise de descente, dans un plan comprenant l'axe de la piste d'atterrissage.

La figure 4 est un schéma expliquant le rapport des angles de visée du point de repère depuis le centre de phase des antennes des radiobalises de site et de descente.

La figure 5 est un schéma montrant l'inclinaison de l'axe longitudinal de l'antenne de la radiobalise de site en vue de faire coïncider la trajectoire de descente à pente minimale formée par la radiobalise de site et de la trajectoire de descente formée par la radiobalise de descente, au point de repère.

Description du meilleur mode de réalisation de l'invention

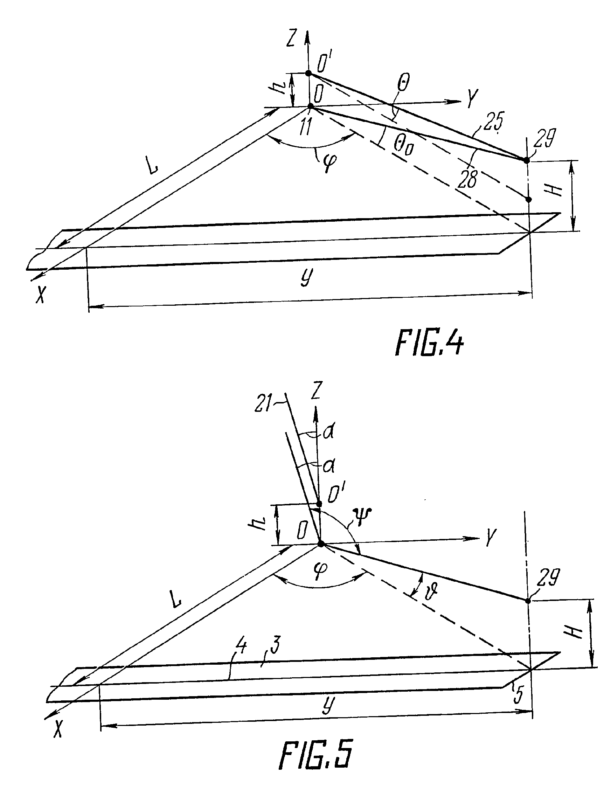

La figure 3 représente un schéma expliquant la position relative des radiobalises de guidage en site dans le système de radiobalises indépendantes de guidage en site. Le système de radiobalises indépendantes de guidage en site comprend une radiobalise de descente 1 et une radiobalise de site 2. Les radiobalises de descente 1 et de site 2 sont installées d'un même côté de la piste de décollage et d'atterrissage 3 et possèdent un axe 4 et un seuil 5 correspondant à l'entrée de la piste de décollage et d'atterrissage 3 suivant le sens de l'approche à l'atterrissage (flèche 6).

Les radiobalises de descente 1 et de site 2 comprennent, respectivement, des antennes 7 et 8 dotées de chambres d'appareillage 9, 10 et émettant, respectivement, dans la bande d'ondes métriques et dans la bande de micro-ondes. Le centre de phase 11 de l'antenne 7 de la radiobalise de descente 1 se trouve au niveau de la surface du sol dans le support 12 de l'antenne 7, à une distance $L_1$ (ordinairement $L_1$ = 120 à 190 m) de l'axe 4 de la piste de décollage et d'atterrissage 3. Le centre de phase 13 de l'antenne 8 de la radiobalise de site 2 se trouve à une hauteur $h \approx 2,7$ à 3,5 m au-dessus de la surface du sol. Le support 14 de l'antenne 8 est situé à une distance $L_2$ (normalement $L_2$ = 110 à 188m) de l'axe 4 de la piste de décollage et d'atterrissage 3. Il est à signaler que la radiobalise de site 2 peut être placée d'un côté par rapport à la radiobalise de descente 1 aussi bien que de l'autre, pourvu que le support 14 de l'antenne 8 de la radiobalise de site 2 se trouve toujours sur la droite 15 passant par le support 12 de l'antenne 7 de la radiobalise de descente 1 et perpendiculaire à l'axe 4 de la piste 3. Une telle position relative de la radiobalise de descente 1 et de la radiobalise de site 2 permet de placer la radiobalise de site 2 en dehors de la zone critique 16 de la radiobalise de descente 1 c'est-à-dire en dehors de la zone de Fresnel de sa propre antenne 7.

L'antenne 7 est réalisée sous forme d'un mât 17 fixé sur le support 12. Le mât 17 comporte trois éléments actifs 18 du type directeur.

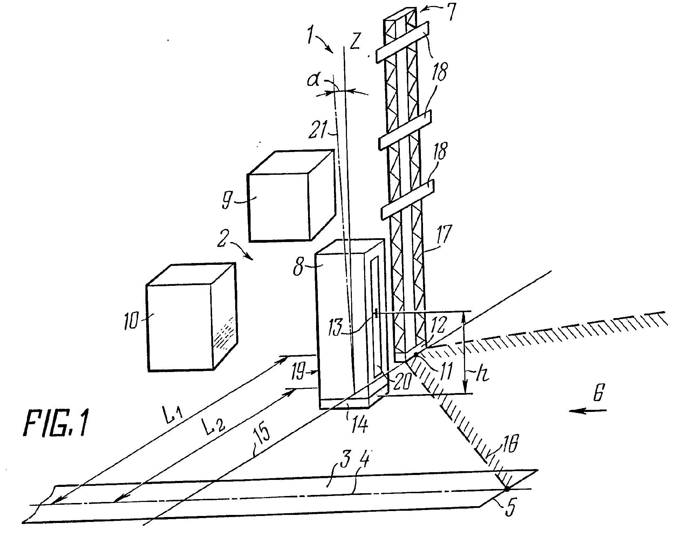

L'antenne 8 est réalisée sous forme d'un réseau d'antennes du type réseau de phase (non représenté sur la figure 1) monté à l'intérieur d'un conteneur 19 doté d'un abri radiotransparent 20 sur lequel un signe "+" marque toujours la position du centre de phase 13 du réseau de phase en d'autres termes de l'antenne 8. On sait que les éléments actifs d'un réseau de phase (non représenté sur la figure 1) sont disposés dans le sens de son axe longitudinal, en l'occurence dans le sens de l'axe longitudinal 21 de l'antenne 8.

L'antenne 8 de la radiobalise de site 2 ne se trouve . pas en position strictement verticale, mais elle est inclinée par rapport à la surface du sol, c'est-à-dire que son axe longitudinal 21 est incliné par rapport à la verticale, du côté de la piste de décollage et d'atterrissage 3, d'un angle $\alpha$ = arctg $h/L_2$ (1). L'inclinaison de l'axe longitudinal 21 de l'antenne 8 peut être obtenue par n'importe quel procédé connu, selon le mode de réalisation concret de l'antenne 8. Dans l'exemple envisagé, l'inclinaison de l'axe longitudinal 21 du réseau d'antennes en phase est obtenue en desserrant les boulons d'ancrage (non représentés sur le dessin) servant à fixer le réseau de phase sur le support 14.

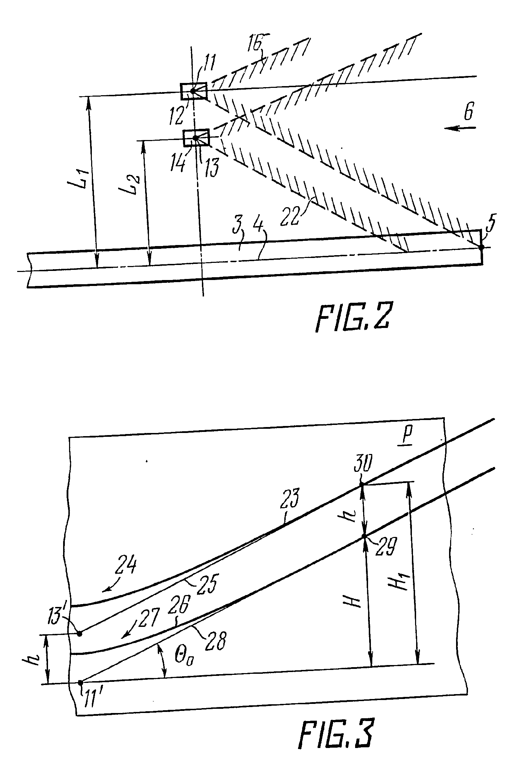

La figure 2 représente un schéma simplifié du système de radiobalises indépendantes de guidage en site (vue de dessus) duquel il ressort que lorsqu'on place la radiobalise de descente 1 et la radiobalise de site 2 sur une même droite 12, perpendiculaire à l'axe 4 de la piste de décollage et d'atterrissage 3, ce qui permet d'éviter ainsi non seulement de placer la radiobalise de site 2 dans la zone critique 16 de la radiobalise de descente 1, mais permet aussi d'éviter que la radiobalise de descente 1 se trouve dans la zone critique 22 de la radiobalise de site 2, ce qui aurait pour conséquence que les structures de la radiobalise de descente 1 interféreraient avec le champ de rayonnement de la radiobalise de site 2.

La figure 3 représente la position théorique des trajectoires de descente formées par les radiobalises de site 1 et de descente 1, lorsque l'antenne 8 de la radiobalise de site 2 se trouve en position verticale dans un plan P comprenant l'axe 4 de la piste de décollage et d'atterrissage 3. Le repère "O" indique la position de la projection du centre de phase 11 (figure 1) de la radiobalise de descente 1 sur le même plan P comprenant l'axe 4.

Le repère $O_{13}$ indique la position de la projection du centre de phase 13 de l'antenne 8 de la radiobalise de site 2 sur le plan P comprenant l'axe 4. Il est évident que le point $O_{13}$ se trouve à une hauteur "h" telle que h = 2,7 à 3,5 m au-dessus du point $O_{11}$. La radiobalise de site 2 détermine la position de la trajectoire de descente à pente minimale 23 qui, dans sa phase finale 24, dévie toujours de son prolongement 25. La radiobalise de descente 1 détermine la position de la trajectoire de descente 26, qui dans sa phase finale 27 dévie toujours de son prolongement 28 d'un angle $\Theta_0$ de pente du prolongement 28 par rapport à l'horizon. Sur la ligne de descente 26 se trouve le point de repère 29 se trouvant toujours au-dessus du seuil 5 dans le plan P comprenant l'axe 4. La trajectoire de descente à pente minimale 23, formée par la radiobalise de site 2, passe sur toute sa longueur à une hauteur plus grande que celle du point de repère 29. Il est évident que le point de repère 30 formé par la radiobalise de site 2 doit, lui aussi, se trouver au-dessus du seuil 5 de la piste de décollage et d'atterrissage 3 et que ce point de repère se trouve au-dessus du point de repère 29, à une hauteur égale à la hauteur h du centre de phase 13 (figure 1) de l'antenne 8 au-dessus de la surface du sol. Un tel écart de la trajectoire de descente en pente minimale 23 (figure 2) et du point de repère 30, formés par la radiobalise de site 2 par rapport au point de repère 29 formé par la radiobalise de descente 1 est pourtant incompatible avec les normes de la "Convention relative à l'Aviation civile internationale de l'OACI", Annexe 10, Supplément G.

Pour que la trajectoire à pente minimale 23 formée par la radiobalise de site 2 passe par le point de repère 29, il faut incliner le plan de balayage de l'antenne 8 de la radiobalise de site 2 du côté de la piste de décollage et d'atterrissage 3, de manière que la trajectoire de descente en pente minimale 23 coupe la trajectoire de descente 26 au point de repère 29. Il est évident que, à cet effet, il faut incliner l'axe longitudinal 21 de l'antenne 8 d'un angle, orienté (figure 1) par rapport à la verticale Z, orienté du côté de la piste de décollage et d'atterrissage 3, comme indiqué sur la figure 1. Cette position de l'antenne 8 de la radiobalise de site 2 permet de faire coïncider les points de repère 29 et 30 formés par les radiobalises de descente 1 et de site 2 ce qui est conforme aux prescriptions de l'Annexe 10 à la Convention relative à l'Aviation civile internationale. Ceci est indispensable dans les cas où les avions sont équipés des dispositifs radio-électriques de bord fonctionnant dans la bande d'ondes métriques ou la bande de micro-ondes.

Comme il a été déjà signalé, les supports 12 et 14 des antennes 7 et 8 se trouvent sur une droite 15 perpendiculaire à l'axe 4 de la piste de décollage et d'atterrissage 3 et la valeur absolue de la différence des distances $L_1$ et $L_2$ entre l'axe 4 de la piste de décollage et d'atterrissage 3 et les supports 12 et 14 des antennes 7 et 8, respectivement, doit être choisie dans un intervalle de 12 à 19 m, c'est-à-dire qu'il faut satisfaire à la condition $\left| L_1 - L_2 \right| < 0,1L_1$ , (2) et lorsque la radiobalise de site 2 est placée entre la radiobalise de descente 1 et la piste de décollage et d'atterrissage 3 (comme l'indiquent les figures 1, 2), on obtient une trajectoire à pente minimale 23 plus précise grâce à sa plus faible courbure dans la phase finale 24 d'approche à l'atterrissage, c'est-à-dire qu'il est préférable que la distance $L_2$ soit inférieure à la distance $L_1$ .

Si la radiobalise de site 2 se trouve plus loin que la radiobalise de descente par rapport à l'axe 4 de la piste de décollage et d'atterrissage 3, c'est-à-dire que $L_2 > L_1$. La ligne de descente à pente minimale 23 dans la phase finale 24 s'écarte plus loin de la ligne de prolongement 25 de la trajectoire de descente, ce qui s'explique par les propriétés de formation de la ligne à pente minimale 23 par la radiobalise de site 2, qui dépendent de la distance $L_2$ entre la piste de décollage et d'atterrissage 3 et le support 14 de l'antenne 8.

Démontrons théoriquement que la relation (1) est juste.

Comme il a été signalé, la trajectoire de descente en pente minimale 23 se trouve à une hauteur h au-dessus du point de repère 29. La hauteur H (figure 3) du point de repère (28 au-dessus de l'horizon est de 15 m conformément à l'Annexe 10 de la Convention relative à l'Aviation civile internationale de l'OACI.

Rappelons, en outre, que selon (2), $L_1 - L_2 \ll L_1$ ou $L_2$ ; donc posons que $L_1 \simeq L_2 \simeq L$.

La figure 4 représente exactement le cas, où $L_1 \simeq L_2 \simeq L$ dans un système de coordonées repérées en XYZ.

L'origine des coordonnées 0 se trouve au point d'emplacement du centre de phase 11 (figure 1) de l'antenne 7, alors que le centre de phase 13 de l'antenne 8 se trouve au point 0', à une hauteur h au-dessus du point 0.

Selon le principe choisi de formation de la trajectoire de descente dans le système ILS, l'angle $\theta_o$ de pente de la trajectoire de descente 26 (figure 23) est mesuré à partir de la surface du sol et le sommet de cet angle se trouve au niveau de la surface su sol. Cela s'explique par le fait que le centre de phase 11 (figure 1) de l'antenne 7 de la radiobalise de descente 1 est confondu avec le support 12 de l'antenne 7.

Le centre de phase 13 (figure 5) de l'antenne 8 de la radiobalise de piste 2 se trouve à une hauteur h (milieu du réseau d'antennes à éléments en phase) au-dessus de la surface du sol.

Comme on l'a déjà montré plus haut, la radiobalise de descente 1 et la radiobalise de site 2, dans le cas où l'antenne 8 (figure 1) est en position strictement verticale, forment, respectivement, les points de repère 29 (figure 3) et 30 se trouvant, respectivement, à la hauteur H et H' au-dessus du seuil 5. Il est évident que pour faire coïncider, les points de repère 29 et 30, il faut que la hauteur H soit égale à la hauteur H', c'est-à-dire : H' = H.

En ce cas, selon la figure 4, la hauteur H du point de repère 29 pour la radiobalise de descente 1 est déterminée à l'aide de la formule :

$$\sqrt{L^2 + y^2} \, \mathrm{tg}\, \theta_0, \qquad (3)$$

et pour la radiobalise de site 2, à l'aide de la formule :

$$\sqrt{L^2 + y^2} \, \mathrm{tg}\, \theta + h, \qquad (4)$$

où $\theta_0$ est l'angle de pente de la trajectoire de descente 26 qui est pratiquement égal à l'angle sous lequel le point de repère 29 est visé depuis le centre de phase 11 de l'antenne 7 (figure 1) de la radiobalise de descente 1 ;

$\theta$ est l'angle sous lequel le point de repère 29 (figure 4) est visé depuis le centre de phase 13 de l'antenne 8 (figure 1) de la radiobalise de site 2 ; y est la distance entre l'origine des coordonnées, soit le centre de phase 11 de l'antenne 7, suivant l'axe des Y et le point de repère 29.

Il ressort de l'expression (3) que le lieu géométrique des points de la trajectoire de descente 26 (figure 3) formée par la radiobalise de descente 1 (figure 1) est une surface conique dont l'axe se confond avec l'axe des Z et dont le sommet se trouve dans le support 12 de l'antenne 7. L'angle d'ouverture de ce cône est égal à 90° - $\Theta_o$.

Il ressort de l'expression (4) que le lieu géométrique des points de la trajectoire de descente à pente minimale 23 (figure 3) formée par la radiobalise de site 2 (figure 1) est une surface conique dont le sommet se trouve au centre de phase 13 de l'antenne 8 et dont l'angle d'ouverture est 90° - 0.

Comme la condition de coïncidence des points de repère 29 et 30 (figure 3) de la trajectoire de descente 26 formée par la radiobalise de descente 1 et de la trajectoire à pente minimale 23 formée par la radiobalise de site 2, doit être telle que H' = H, on a

$$\sqrt{L^2 + y^2} \, \mathrm{tg}\Theta_o = h + \sqrt{L^2 + y^2} \, \mathrm{tg}\Theta. \quad (5)$$

Etant donné les faibles valeurs de $\Theta_o$ et $\Theta$, on peut admettre que

$$\mathrm{tg}\Theta_o \simeq \Theta_o \quad \text{et} \quad \mathrm{tg}\Theta \simeq \Theta.$$

Alors, l'équation (5) peut être écrite comme suit, en la résolvant pour $\Theta$ :

$$\Theta = \Theta_o - \frac{h}{L} \cdot \frac{1}{\sqrt{1 - \dfrac{y^2}{L^2}}}$$

$$\text{ou} \quad \Theta = \Theta_o - \frac{h}{L} \cos\varphi \quad (6)$$

où $\varphi$ est l'angle azimutal.

Il ressort de l'expression (6) que l'angle 0 sous lequel le point de repère 29 est visé depuis le centre de phase 13 du réseau d'antennes à éléments en phase de la radiobalise de site 2 doit varier en fonction de l'angle azimutal $\varphi$ . Donc, la hauteur de la surface conique servant de lieu géométrique des points de la trajectoire de descente à pente minimale 23 formée par la radiobalise de site 2 ne coïncide pas avec l'axe des Z.

Il ressort également de l'expression (6) qu'à de grandes distances par rapport aux radiobalises 1 et 2, lorsque y = $\infty$ , cos $\varphi$ = 0, $\varphi$ = 90° ;

$\theta$ = $\theta_0$, alors que pendant le passage par le travers des radiobalises 1, 2, lorsque $\varphi$ = 0, cos $\varphi$ = 1 :

$$\theta = \theta_0 - \frac{h}{L} \; .$$

Ainsi donc, pour que la trajectoire de descente 26 formée par la radiobalise de descente 1 et la trajectoire de descente à pente minimale 23 formée par la radiobalise de site 2 se confondent en point de repère 29, il faut que l'antenne 8 de la radiobalise de site 2 engendre dans l'espace un diagramme de rayonnement tel que l'angle 0 varie selon l'équation (6), c'est-à-dire qu'il faut incliner l'axe longitudinal 21 (figure 1) de l'antenne 8, comme on voulait le démontrer préalablement.

Si on incline l'axe longitudinal 21 de l'antenne 8 dans le plan XOZ d'un angle $\alpha$ du côté de la piste de décollage et d'atterrissage (figure 5), on aura, comme il est connu, pour les plans orthogonaux :

$$\cos \psi = \cos \theta \; \cos \varphi \; \sin \alpha + \sin \theta \cos \alpha \quad (7)$$

où $\psi$ (figure 5) est l'angle maximal de déviation du diagramme de rayonnement du réseau d'antennes à éléments en phase de la radiobalise de site 2 (figure 1) par rapport à son axe longitudinal 21.

Introduisons un angle $\vartheta = 90° - \varphi$ correspondant à la déviation minimale du diagramme de rayonnement d'antenne par rapport à la normale au plan d'ouverture du réseau d'antennes à éléments en phase. Lorsque les valeurs de sont faibles et étant donné que sin $\simeq \alpha$ , cos $\alpha \simeq$ 1, sin $\theta \simeq \theta$ on obtient

$$\vartheta = \theta_0 - \alpha \cos \varphi \qquad (8)$$

Pour $\varphi = 90°$, on a $\vartheta = \theta_0$ , ce qui correspond à l'angle de pente de la trajectoire de descente fixé dans le système 1LS.

En comparant les expressions (6) et (8), on peut conclure que, pour que les trajectoires de descente 29, 3C se confondent pendant tout le parcours de l'avion en approche finale, et à plus forte raison en point de repère, il faut que l'angle $\alpha$ d'inclinaison de l'axe longitudinal 21 (figure 1) de l'antenne 8 de la radiobalise de site 2 du côté de la piste de décollage et d'atterrissage 3 soit telle que :

$$\alpha = \text{arctg} \ \frac{h}{L} \qquad (9)$$

Comme la distance réelle du support 12 de l'antenne 8 de l'axe 4 de la piste de décollage et d'atterrissage 3 est $L_2$, la relation (9) s'écrit comme l'expression (1), soit

$$\alpha = \text{arctg} \ \frac{h}{L_2} \ ,$$

comme on souhaitait le démontrer.

Connaissant que la hauteur h $\simeq$ 2,7 à 3,5 m,
$L_2$ = 100 à 180 m, on obtient un angle $\alpha$ = 1 à 1,5°.

Le fonctionnement du système de radiobalises indépendantes de guidage en site est le suivant.

La radiobalise de descente 1 (figure 1) et la radiobalise de site 2 forment leurs propres champs de rayonnement. Celui de la radiobalise de descente 1 forme la trajectoire unique de descente 26 (figure 3) et celui de la radiobalise de site 2 fait le codage de l'espace en coordonnées de site, ce qui permet d'obtenir une multitude de trajectoires à suivre. Toutefois, dans le cas considéré ou l'on utilise conjointement des systèmes ILS et MLS, on choisit parmi la multitude de trajectoires de descente formées par la radiobalise de site 2 (figure 1) la seule trajectoire à pente minimale 23 (figure 3) qui se confond au point de repère 29 avec la trajectoire de descente 26. L'antenne 7 (figure 1) de la radiobalise de descente 1 émet des signaux dans la bande d'ondes métriques (ILS) à partir desquels est formée la trajectoire de descente 26 pour l'approche à l'atterrissage des avions du type ILS. La trajectoire de descente 26 ne présente pas de distorsions provoquées par des distorsions du champ de rayonnement de l'antenne 7 de la radiobalise de descente 1, puisque les structures de la radiobalise de site n'influencent pas celles-ci. Grâce à ce fait, un avion du type ILS reçevant les signaux de l'antenne 7 s'engage à l'aide d'instruments dans la trajectoire de descente 26, en respectant le minimum d'atterrissage attribué à l'aérodrome, au-dessous duquel l'équipage passe au pilotage manuel.

Lorsqu'un avion du type MLS arrive dans la zone de l'aérodrome, il reçoit les signaux émis par l'antenne 8 et effectue l'approche à l'atterrissage suivant la même trajectoire que l'avion du type ILS et en respectant le même minimum d'atterrissage, car la trajectoire de descente 26 et la trajectoire à pente minimale 23 se confondent en point de repère 29. A noter que toute influence des structures de la radiobalise de descente 1 sur le champ de rayonnement de la radiobalise de site 2 est également impossible.

Ainsi, l'invention permet de réaliser un système de radiobalises indépendantes de guidage en site dans lequel la position relative de la radiobalise de descente 1 et de la radiobalise de site 2 permet de placer la radiobalise de site 2 en dehors de la zone critique 16 de la radiobalise de descente 1, ce qui est rendu possible grâce au fait que le support 14 de l'antenne 8 se trouve sur la droite 15 sur laquelle se trouve le support 12 de l'antenne 7 de la radiobalise de descente 1, cette droite 15 étant perpendiculaire à l'axe 4 de la piste de décollage et d'atterrissage.

Ceci a permis d'éviter les courbures de la trajectoire de descente 26 formée par la radiobalise de descente 1.

L'invention permet également d'éliminer l'effet de non-coïncidence de la trajectoire de descente 26 formée par la radiobalise de descente 1 et de la trajectoire de descente à pente minimale 23 formée par la radiobalise de site 2, provenant normalement du décalage dans l'espace des centres de phase 11 et 13 des antennes 7 et 8 de ces radiobalises en hauteur et à distance de l'axe 4 de la piste de décollage et d'atterrissage 3. On est arrivé à compenser ce décalage en hauteur et à distance de la piste de décollage et d'atterrissage 3 grâce au fait que l'axe longitudinal 21 de l'antenne 8 de la radiobalise de site 2 est incliné d'un angle $\alpha$ par rapport à la verticale 7 du côté de la piste de décollage et d'atterrissage.

Ceci permet l'atterrissage dans les aéroports des avions du type ILS aussi bien que du type MLS, l'approche à l'atterrissage se faisant aux instruments jusqu'au minimum d'atterrissage correspondant à la catégorie de performances d'exploitation de l'aéroport donné.

Application industrielle

L'invention peut être utilisée dans tous les aéroports utilisant simultanément les systèmes d'atterrissage des avions équipés du matériel de bord fonctionnant dans les bandes d'ondes métriques et de micro-ondes.

Revendications

1. Système de radiobalises indépendantes de guidage en site du type comprenant, disposées d'un même côté d'une piste de décollage et d'atterrissage (3), une radiobalise de descente (1) dotée d'une antenne (7) émettant dans la bande d'ondes métriques et dont le support (12) est disposé sur la surface du sol à une distance $(L_1)$ de l'axe (4) de la piste de décollage et d'atterrissage (3) et comprenant une radiobalise de site (2) dotée d'une antenne (8) émettant dans la bande de micro-ondes dont le centre de phase (13) se trouve à une hauteur (h) au-dessus de la surface du sol, caractérisé en ce que le support (14) de l'antenne (8) de la radiobalise de site (2) se trouve à une distance $(L_2)$ de l'axe (4) de la piste de décollage et d'atterrissage (3), sur une droite (15) passant par le support (12) de l'antenne (7) et perpendiculaire à l'axe (4) de la piste de décollage et d'atterrissage (3), et que l'axe longitudinal (21) de l'antenne (8) de la radiobalise de site (2) est incliné par rapport à la verticale (Z) du côté de la piste de décollage et d'atterrissage (3) d'un angle

$$\alpha = \text{arctg } \frac{h}{L_2}$$

2. Système selon la revendication 1, caractérisé en ce que la valeur absolue de la différence des distances $(L_1, L_2)$ entre l'axe (4) de la piste de décollage et d'atterrissage (3) et les supports (12, 14) des antennes (7, 8) des radiobalises de descente (1) et de site (2) est choisie dans un intervalle compris entre 12 et 19 m.

3. Système selon la revendication 2, caractérisé en ce que la distance $(L_2)$ entre le support (14) de l'antenne (8) de la radiobalise de site (2) et l'axe (4) de la piste de décollage et d'atterrissage (3) est inférieure à la distance ($L_1$) entre l'axe (4) et le support (12) de l'antenne (7) de la radiobalise de descente (1).

FIG.1

EP 0 395 760 A1

FIG.2

FIG.3

EP 0 395 760 A1

FIG.4

FIG.5

# INTERNATIONAL SEARCH REPORT

International Application No PCT/SU 88/00130

## I. CLASSIFICATION OF SUBJECT MATTER (if several classification symbols apply, indicate all) [6]

According to International Patent Classification (IPC) or to both National Classification and IPC

IPC[4]:  G 01 S  1/18

## II. FIELDS SEARCHED

### Minimum Documentation Searched [7]

| Classification System | Classification Symbols |
|---|---|
| IPC[4]: | G 01 S 1/14, 1/16, 1/18 |

### Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 4115777, (Plessey Handel und Investments AG), 19 September 1978, see figure 5, the claims | 1 |
| A | US, A, 3968495, (Rudolf Clemens Hergenrother), 6 July 1976, see figure 2, the claims | 1 |
| A | US, A, 3911436, (Bodenseewerk Geratetechnik GmbH), 7 October 1975, see figures 2,3,4 and the claims | 1-3 |
| A | US, A, 3781891 (ROBERT R. Moose), 25 December 1973, see figures 1,2,3 and the claims | |
| A | DE, C3, 1441748, (LUFTFAHRTMINISTER IN DER REGIERUNG IHRER MAJESTÄT DER KÖNIGIN DER VEREINIGTEN KÖNIGREICHE VON GROSSBRITANNIEN UND NORDIRLAND), 26 September 1974, see figure 1, the claims | 1 |
| A | DE, A1, 3332541, (Standard Elektrik Lorenz AG), 28 March 1985, see the drawing, the claims & GB, A1, 2147170, 1 May 1985 FR, A1, 2551878, 15 March 1985 JP, A2, 60-100068, 3 June 1985 US, A, 4599621, 8 July 1986 | 1 |
| A | GB, B, 1506821, (TULL AVIATION CORPORATION) 12 April 1978, see figures 1,2, the claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 January 1989 (16.01.89) | 24 February 1989 (24.02.89) |

| International Searching Authority | Signature of Authorized Officer |
|---|---|
| ISA/SU | |

Form PCT/ISA/210 (second sheet) (January 1985)